# EUROPÄISCHE PATENTSCHRIFT

(11) **EP 2 329 974 B1**
(45) Veröffentlichungstag und Bekanntmachung des Hinweises auf die Patenterteilung: **20.03.2013**
(21) Anmeldenummer: 09177979.3
(22) Anmeldetag: 04.12.2009
(51) Int. Cl.: B60J 3/00, B60Q 1/00

(54) **Verfahren und Vorrichtung zum Vermindern der Blendwirkung durch ein entgegenkommendes Fahrzeug**
Method and device for reducing the dazzling effect of an approaching vehicle
Procédé et dispositif destinés à réduire l'éblouissement produit par un véhicule

(43) Veröffentlichungstag der Anmeldung: 08.06.2011
(73) Patentinhaber: Hella KGaA Hueck & Co., 59552 Lippstadt (DE)
(72) Erfinder: Wilks, Carsten, 59555 Lippstadt (DE)

(56) Entgegenhaltungen:
- DE-A1- 19 941 125
- DE-A1- 19 952 945
- US-A1- 2008 186 701

## Beschreibung

Die Erfindung betrifft ein Verfahren zum Vermindern der Blendwirkung eines Fahrers eines ersten Fahrzeugs durch ein entgegenkommendes zweites Fahrzeug sowie eine entsprechende Vorrichtung.

Beim Führen eines Fahrzeugs bei Dunkelheit besteht für den Fahrer das Problem, dass er durch entgegenkommende Fahrzeuge geblendet werden kann. Zwar erfolgt eine Adaption der Augen von dunkel nach hell relativ schnell innerhalb weniger Sekunden. Aber die Adaption an die Dunkelheit nach der Blendung erfordert sehr viel mehr Zeit. So benötigen die Augen etwa 30 Minuten, um sich von einem hell erleuchteten Arbeitsraum an nächtliche Dunkelheit im Freien anzupassen. Zwar wird diese Adaptionszeit wegen der am eigenen Fahrzeug vorhandenen Scheinwerfer reduziert; trotzdem besteht für den Fahrer das Problem der Adaption von hell nach dunkel, insbesondere wenn das entgegenkommende Fahrzeug moderne Scheinwerfer mit starken Helligkeitsdichten aufweist. Die Sehleistung des Fahrers ist entsprechend der Adaption der Augen eingeschränkt.

Die DE 199 41 125 A1 beschreibt einen optischen Blendungsbegrenzer, der z.B. an einer fahrerseitigen Sonnenblende verschwenkbar befestigt ist. Der Blendungsbegrenzer umfasst einen Lichtsensor, eine Lichtquelle und eine elektronische Steuerung. Im Betrieb, das heißt im ausgeschwenkten Zustand des Blendungsbegrenzers, ist die Lichtquelle so angeordnet, dass in einem Gesichtsfeld des Fahrers eine zusätzliche Helligkeit erzeugt wird. Die von der Lichtquelle erzeugte Helligkeit wird von der Steuerung in Abhängigkeit von einer auf dem Lichtsensor auftreffenden Leuchtdichte gesteuert. Dieser Blendungsbegrenzer hat den Nachteil, dass aufgrund des zusätzlichen Lichts die Adaption der Augen von hell nach dunkel erschwert wird.

Aus der DE 199 52 945 B4 ist ein System zum Eliminieren von Blendungen in einem Fahrzeug bekannt, bei dem ein Bereich einer Frontscheibe, durch den von einer blendenden Lichtquelle abgestrahltes Licht auf Augen eines Fahrers trifft, selektiv verändert wird. Die Veränderung bewirkt eine Verminderung der Blendwirkung. Zur Ermittlung des Bereichs der Frontscheibe werden eine Augenposition des Fahrers und eine Position der blendenden Lichtquelle bestimmt. Das System ist insgesamt sehr aufwendig, insbesondere das selektive Verändern der Frontscheibe, deren Herstellung relativ teuer ist.

Die Aufgabe der Erfindung ist es, ein Verfahren und eine entsprechende Vorrichtung zum Vermindern der Blendwirkung eines Fahrers eines ersten Fahrzeugs durch ein entgegenkommendes zweites Fahrzeug zu schaffen, das bzw. die mit vorhandenen Mitteln und/oder einfachen zusätzlichen Mitteln durchführbar bzw. ausführbar ist.

Die Aufgabe ist durch die Merkmale des Anspruchs 1 bzw. des Anspruchs 9 gelöst.

Mittels eines ersten Sensors werden Stellen hoher Leuchtdichten ermittelt. Solche Sensoren sind an sich bekannt, beispielsweise um eigene Scheinwerfer bei Gegenverkehr automatisch abzublenden, und umfassen z.B. eine Kamera mit einem Fotoarray und einer Auswertesoftware. Alternativ umfasst der erste Sensor einen Leuchtdichtesensor oder mindestens einen Fotowiderstand. Der erste Sensor erlaubt die Unterscheidung unterschiedlicher und die Auswahl relevanter Lichtquellen anhand von Leuchtdichten und relativen Positionen zu dem Fahrzeug. Andere Lichtquellen wie Straßenbeleuchtung und Hausbeleuchtungen werden als solche erkannt und verworfen. Damit werden nur die Scheinwerfer von entgegenkommenden zweiten Fahrzeugen berücksichtigt.

Eine optimale Blickrichtung des Fahrers wird bestimmt. Hierbei wird berücksichtigt, dass einerseits die Blendung des Fahrers möglichst gering gehalten wird; die Signale des Sensors werden entsprechend ausgewertet. Andererseits wird die Blickrichtung so geführt, dass der Fahrer den Überblick über die Verkehrssituation behält. Hierfür werden die Signale von bekannten Mitteln verwertet, die bereits in dem ersten Fahrzeug vorhanden sind und/oder für das erfindungsgemäße Verfahren eingebaut werden. Bei Rechtsverkehr ist die optimale Blickrichtung zwischen dem rechten Fahrbahnrand und dem zweiten Fahrzeug. Ein Ort der optimalen Blickrichtung liegt in einem Abstand vor dem ersten Fahrzeug, der in etwa dem hundertfachen einer Anbauhöhe von Scheinwerfern des ersten Fahrzeugs entspricht.

Dem Fahrer wird ein visueller Reiz gegeben, damit er der optimalen Blickrichtung folgt. Der visuelle Reiz ist also an einer Stelle angeordnet, die aus Sicht des Fahrers der optimalen Blickrichtung entspricht. Der visuelle Reiz ist z.B. in Form eines farbigen Pfeils oder Kreises ausgebildet, der auf der Windschutzscheibe oder der Fahrbahn sichtbar gemacht wird.

Der Fahrer wird insgesamt angeleitet, in eine Richtung zu blicken, in der er den Überblick über die Verkehrssituation hat und gleichzeitig möglichst wenig geblendet wird. Adaptionszeiten der Augen werden so minimiert und damit deren Sehleistung optimal erhalten.

Die Unteransprüche betreffen die vorteilhafte Ausgestaltung der Erfindung.

In einer alternativen Ausgestaltung der Erfindung werden zur Ermittlung der Stellen hoher Leuchtdichten Bilder einer ersten Kamera ausgewertet, die den Sensor bildet.

In einer weiteren Alternative wird die optimale Blickrichtung des Fahrers in Abhängigkeit einer Position des ersten Fahrzeugs relativ zu einem Fahrbahnrand bestimmt, bei Rechtsverkehr zu dem rechten Fahrbahnrand. Dieser ist repräsentativ für die Verkehrssituation, so dass diese bei der Bestimmung der optimalen Blickrichtung ausreichend berücksichtigt werden kann.

Die Position des ersten Fahrzeugs relativ zu dem Fahrbahnrand ist z.B. mittels der bekannten Spurhalteassistenten bestimmbar.

Alternativ dazu wird die Position des ersten Fahrzeugs relativ zu dem Fahrbahnrand mittels eines Lenkradeinschlags und einer Gierrate des ersten Fahrzeugs bestimmt. Dies erfolgt analog einem dynamischen Kurvenlicht.

In einer weiteren Ausgestaltung der Erfindung wird der visuelle Reiz mittels eines Lichtstrahls erzeugt. Hierfür ist z.B. ein Spot- Scheinwerfer mit farbigem Licht und hoher Leuchtdichte oder eine Laservorrichtung angeordnet und entsprechend verstellbar.

Bevorzugt wird der visuelle Reiz alternativ auf eine Windschutzscheibe des ersten Fahrzeugs projiziert. Solche Projektoren sind bekannt und projizieren diverse Anzeigen wie z.B. Geschwindigkeit und/oder Fahrtroute. Der visuelle Reiz kann einfach als zusätzliche Anzeige in den Projektor integriert werden.

In einer Alternative in Verbindung mit dem Projektor wird die optimale Blickrichtung des Fahrers in Abhängigkeit einer Position dessen Kopfes bestimmt. Damit ist auch die ungefähre Position der Augen bekannt, so dass die optimale Blickrichtung noch genauer auf der Windschutzscheibe projiziert werden kann. Mittel zur Positionsbestimmung des Kopfes sind bekannt und werten z.B. eine Position eines Fahrersitzes oder Signale einer zweiten Kamera aus.

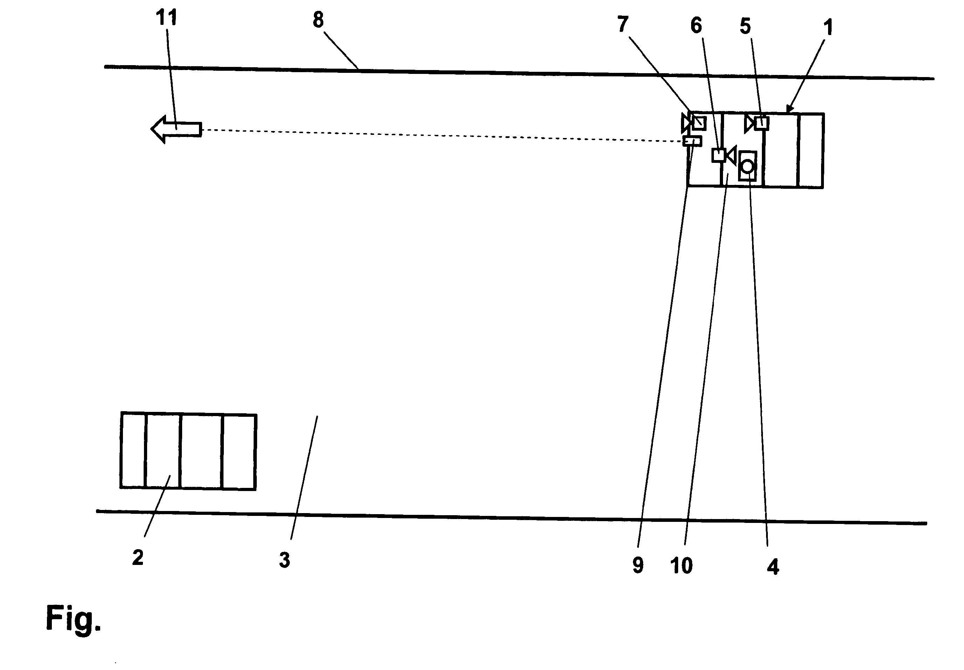

Anhand der beigefügten schematischen Zeichnung wird die Erfindung nachfolgend beispielhaft näher erläutert. Dabei zeigt die einzige Figur ein erstes Fahrzeug mit einer Vorrichtung zum Vermindern der Blendwirkung eines Fahrers durch ein entgegenkommendes zweites Fahrzeug in der Draufsicht.

Wie aus der Figur ersichtlich befindet sich ein erstes Fahrzeug 1 auf einer Fahrbahn 3, auf der ihm en zweites Fahrzeug 2 entgegenkommt.

Das erste Fahrzeug 1 weist eine erfindungsgemäße Vorrichtung zum Vermindern der Blendwirkung eines Fahrers 4 des ersten Fahrzeugs durch das entgegenkommende zweites Fahrzeug 2 auf. Diese Vorrichtung umfasst einen ersten Sensor zum Erfassen hoher Leuchtdichten, erste Mittel zum Bestimmen einer optimalen Blickrichtung des Fahrers 4 und zweite Mittel zum Erzeugen eines visuellen Reizes 11 für den Fahrer 4.

Der erste Sensor umfasst hier eine an sich bekannte erste Kamera 5 mit einem Sensorarray und mit einer ersten Auswerteelektronik, die eine geeignete Software beinhaltet. Hiermit lassen sich das Vorhandensein hoher Leuchtdichten und deren relative Lage bestimmen.

Alternativ zu der ersten Kamera 5 ist ein Leuchtdichtesensor oder mindestens ein Fotowiderstand angeordnet.

Die ersten Mittel umfassen hier einen zweiten Sensor 6 zum Erfassen einer Kopfposition des Fahrers 4, einen dritter Sensor 7 zum Bestimmen einer Position des ersten Fahrzeugs 1 relativ zu einem Fahrbahnrand 8 sowie eine zweite Auswerteelektronik, mittels derer aus Signalen der drei Sensoren 5, 6, 7 im Zusammenwirken mit einer geeigneten Software die optimale Blickrichtung bestimmbar ist. Der zweite Sensor umfasst eine entsprechend ausgerüstete, an sich bekannte zweite Kamera 6, der dritte Sensor einen so genannten, ebenfalls bekannten Spurhalte- Assistenten mit einer dritten Kamera 7.

Bevorzugt umfasst das zweite Mittel einen Projektor, mit dem der visuelle Reiz 11 auf einer Windschutzscheibe 10 des ersten Fahrzeugs 1 abbildbar ist.

Alternativ umfassen die zweiten Mittel einen Spot- Scheinwerfer 9, der mittels Antrieben horizontal und vertikal verschwenkbar in einem Frontbereich des ersten Fahrzeugs 1 befestigt ist. Mit dem Spot- Scheinwerfer 9 ist ein visuelles Reizes in Form eines Lichtpfeils 11 oder alternativ in Form eines kleinen Kreises erzeugbar. Bei dieser Alternative ist der zweite Sensor 6 nicht erforderlich.

Bei einer Fahrt des ersten Fahrzeugs 1 bei Dunkelheit ermittelt der erste Sensor 5 permanent, ob im Vorfeld des ersten Fahrzeugs 1 stellen hoher Leuchtdichte vorhanden sind. Weiterhin erfassen der zweite Sensor 6 die aktuelle Kopfposition und der dritte Sensor 7 die relative Lage des ersten Fahrzeugs 1 zum Fahrbahnrand 8. Sobald das zweite Fahrzeug 2 mit eingeschalteten Hauptscheinwerfern entgegen kommt, wird dies von dem ersten Sensor 5 als hohe Leuchtdichte erkannt; dieser erzeugt ein entsprechendes Signal, das die Erzeugung des visuellen Reizes aktiviert. Hierfür wird aus den Werten für die Position des Kopfes, den relativen Lagen des Fahrbahnrandes 8 sowie der hohen Leuchtdichte die optimale Blickrichtung des Fahrers 4 berechnet. Mit Änderungen der Position des Kopfes und/oder der relativen Lagen ändert sich die optimale Blickrichtung und wird neu berechnet. Der visuelle Reiz wird an einer entsprechenden sich verändernden Stelle erzeugt.

Für die Erzeugung des visuellen Reizes wird mittels des Projektors ein roter Pfeil auf der Windschutzscheibe 10 abgebildet und nachgeführt. Eine Position des Pfeils entspricht hierbei einem Ort vor dem ersten Fahrzeug 1 mit einem Abstand von in etwa dem Hundertfachen einer Anbauhöhe von Scheinwerfern des ersten Fahrzeugs 1.

Alternativ wird der Spot- Scheinwerfer 9 eingeschaltet und entsprechend der optimalen Blickrichtung ausgerichtet. Auf diese Weise wird ein farbiger Lichtpfeil 11 mit hoher Leuchtdichte auf der Fahrbahn 3 in einem Abstand von in etwa dem Hundertfachen der Anbauhöhe der Scheinwerfer des ersten Fahrzeugs 1 erzeugt. Für die Ermittlung der optimalen Blickrichtung wird die Position des Kopfes hier nicht berücksichtigt. Für ein Nachführen des Spot- Scheinwerfers 9 bei Änderungen der relativen Lage zum Fahrbahnrand 8 wird er durch die Antriebe entsprechend verfahren.

Der Fahrer 4 wird so durch Anblicken des visuellen Reizes angeleitet, die Augen von den Scheinwerfern des zweiten Fahrzeugs 2 so weg zu richten, dass einerseits die Augen weniger stark von den hohen Leuchtdichten geblendet werden, andererseits aber der Fahrer 4 trotzdem die Verkehrsituation überblicken kann.

Wenn mehrere zweite Fahrzeuge 2 hintereinander entgegen kommen, wird die optimale Blickrichtung durch entsprechende Berechnung korrigiert. So wird auch in diesem Fall der Blick des Fahrers 4 in die Scheinwerfer der zweiten Fahrzeuge 2 vermieden.

### Bezugszeichenliste

- 1: erstes Fahrzeug
- 2: zweites Fahrzeug
- 3: Fahrbahn
- 4: Fahrer
- 5: erste Kamera
- 6: zweite Kamera
- 7: dritte Kamera
- 8: Fahrbahnrand
- 9: Spot- Scheinwerfer
- 10: Windschutzscheibe
- 11: Lichtpfeil

## Patentansprüche

1. Verfahren zum Vermindern der Blendwirkung eines Fahrers (4) eines ersten Fahrzeugs (1) durch ein entgegenkommendes zweites Fahrzeug (2), wobei mittels eines ersten Sensors (5) Stellen hoher Leuchtdichten ermittelt werden,
wobei eine optimale Blickrichtung des Fahrers (4) bestimmt wird und wobei dem Fahrer (4) ein visueller Reiz (11) gegeben wird, damit der Fahrer (4) der optimalen Blickrichtung folgt.

2. Verfahren nach Anspruch 1, **dadurch gekennzeichnet, dass** zur Ermittlung der Stellen hoher Leuchtdichten Bilder einer den ersten sensor bildenden ersten Kamera (5) ausgewertetwerden.

3. Verfahren nach Anspruch 1 oder 2, **dadurch gekennzeichnet, dass** die optimale Blickrichtung des Fahrers (4) in Abhängigkeit einer Position des ersten Fahrzeugs (1) relativ zu einem Fahrbahnrand (8) bestimmt wird.

4. Verfahren nach Anspruch 3, **dadurch gekennzeichnet, dass** die Position des ersten Fahrzeugs (1) relativ zu dem Fahrbahnrand (8) mittels eines Spurhalteassistenten (7) bestimmt wird.

5. Verfahren nach Anspruch 3, **dadurch gekennzeichnet, dass** die Position des ersten Fahrzeugs (1) relativ zu dem Fahrbahnrand (8) mittels einer Gierrate und eines Lenkradeinschlags des ersten Fahrzeugs (1) bestimmt wird.

6. Verfahren nach einem der Ansprüche 1 bis 5, **dadurch gekennzeichnet, dass** der visuelle Reiz (11) mittels eines Lichtstrahls erzeugt wird.

7. Verfahren nach einem der Ansprüche 1 bis 5, **dadurch gekennzeichnet, dass** der visuelle Reiz (11) auf eine Windschutzscheibe (10) des ersten Fahrzeugs (1) projiziert wird.

8. Verfahren nach Anspruch 7, **dadurch gekennzeichnet, dass** die optimale Blickrichtung des Fahrers (4) in Abhängigkeit einer Position dessen Kopfes bestimmt wird.

9. Vorrichtung zum Vermindern der Blendwirkung eines Fahrers (4) eines ersten Fahrzeugs (1) durch ein entgegenkommendes zweites Fahrzeug (2), umfassend
einen ersten Sensor (5) zum Erfassen hoher Leuchtdichten,
erste Mittel (6, 7) zum Bestimmen einer optimalen Blickrichtung des Fahrers (4), in welcher der Fahrer (4) einen Überblick über eine Verkehrssituation hat sowie gleichzeitig möglichst wenig geblendet wird, und
zweite Mittel (9) zum Erzeugen eines visuellen Reizes (11) für den Fahrer (4), damit der Fahrer (4) der optimalen Blickrichtung folgt.

10. Vorrichtung nach Anspruch 9, **dadurch gekennzeichnet, dass** die zweiten Mittel einen Spot- Scheinwerfer (9) umfassen.

11. Vorrichtung nach Anspruch 9, **dadurch gekennzeichnet, dass** die zweiten Mittel einen Projektor umfassen.

12. Vorrichtung nach Anspruch 11, **dadurch gekennzeichnet, dass** die ersten Mittel einen zweiten Sensor (6) zum Erfassen einer Kopfposition des Fahrers (4) umfassen.

13. Vorrichtung nach einem der Ansprüche 9 bis 12, **dadurch gekennzeichnet, dass** der erste Sensor eine erste Kamera (5) mit geeigneter Software umfasst.

14. Vorrichtung nach einem der Ansprüche 9 bis 13, **dadurch gekennzeichnet, dass** ein dritter Sensor (7) zum Bestimmen einer Position des ersten Fahrzeugs (1) relativ zu einem Fahrbahnrand (8) angeordnet ist.

15. Vorrichtung nach Anspruch 14, **dadurch gekennzeichnet, dass** der dritte Sensor ein Spurhalteassistent (7) ist oder einen Winkelsensor zur Bestimmung eines Lenkradeinschlags und einen Giersensor umfasst.

## Claims

1. Procedure for the reduction of the dazzling of a driver (4) of a first vehicle (1) by an oncoming, second vehicle (2), wherein a first sensor (5) identifies spots with large luminance values,
Wherein an optimal line of sight of the driver (4) is determined and wherein the driver (4) is given a visual stimulus (11) so that the driver (4) follows the optimal line of sight.

2. Procedure according to Claim 1, **characterized in that** for the identification of spots with large luminance values, pictures of a first camera (5) embodying the first sensor are evaluated.

3. Procedure according to Claim 1 or 2, **characterized in that** the driver's (4) optimal line of sight is determined as a function of a position of the first vehicle (1) relative to the shoulder of the road (8).

4. Procedure according to Claim 3, **characterized in that** the position of the first vehicle (1) relative to the shoulder of the road (8) is determined by a lane tracking assistant (7).

5. Procedure according to Claim 3, **characterized in that** the position of the first vehicle (1) relative to the shoulder of the road (8) is determined by a yaw rate and a turning angle of the steering wheel of the first vehicle (1).

6. Procedure according to one of the Claims 1 to 5, **characterized in that** the visual stimulus (11) is generated by means of a light beam.

7. Procedure according to one of the Claims 1 to 5, **characterized in that** the visual stimulus (11) is projected on a windscreen (10) of the first vehicle (1).

8. Procedure according to Claim 7, **characterized in that** the optimal line of sight of the driver (4) depends on a position of his head.

9. Device for the reduction of the dazzling of a driver (4) of a first vehicle (1) by an oncoming, second vehicle (2), comprising
a first sensor (5) for the identification of large luminance values,
first means (6, 7) for the determination of an optimal line of sight for the driver (4), in which the driver (4) has an overview over the traffic situation and is, at the same time, dazzled as little as possible, and
second means (9) for the generation of a visual stimulus (11) for the driver (4), causing the driver (4) to follow the optimal line of sight.

10. Device according to Claim 9, **characterized in that** the second means comprise a spot light (9).

11. Device according to Claim 9, **characterized in that** the second means comprise a projector.

12. Device according to Claim 11, **characterized in that** the first means comprise a second sensor (6) for the identification of a head position of the driver (4).

13. Device according to one of the Claims 9 to 12, **characterized in that** the first sensor comprises a first camera (5) with suitable software.

14. Device according to one of the Claims 9 to 13, **characterized in that** a third sensor (7) for the determination of a position of a first vehicle (1) relative to a shoulder of a road (8) is installed.

15. Device according to Claim 14, **characterized in that** the third sensor is a lane tracking assistant (7) or an angle sensor for the detection of a turning angle of a steering wheel and a yaw rate sensor.

## Revendications

1. Procédé pour réduire l'éblouissement d'un conducteur (4) d'un premier véhicule (1) par un deuxième véhicule venant en sens inverse (2), les points à hautes luminosités étant déterminés par un premier capteur (5),
une direction du regard optimale du conducteur (4) étant déterminée et
une stimulation visuelle (11) étant donnée au conducteur (4) pour que le conducteur (4) suive la direction du regard optimale.

2. Procédé selon la revendication 1, **caractérisé en ce que** les images d'une première caméra (5) constituant le premier capteur seront exploitées pour déterminer les points à hautes luminosités.

3. Procédé selon la revendication 1 ou 2, **caractérisé en ce que** la direction du regard optimale du conducteur (4) est déterminée en fonction d'une position du premier véhicule (1) par rapport à un accotement (8).

4. Procédé selon la revendication 3, **caractérisé en ce que** la position du premier véhicule (1) par rapport à l'accotement (8) est déterminée au moyen d'un assistant d'avertissement de sortie de voie (7).

5. Procédé selon la revendication 3, **caractérisé en ce que** la position du premier véhicule (1) par rapport à l'accotement (8) est déterminée au moyen d'un taux de lacet et d'un angle de volant d'un premier véhicule (1).

6. Procédé selon l'une des revendications 1 à 5, **caractérisé en ce que** la stimulation visuelle (11) est engendrée au moyen d'un faisceau lumineux.

7. Procédé selon l'une des revendications 1 à 5, **caractérisé en ce que** la stimulation visuelle (11) est projetée sur un pare-brise (10) du premier véhicule (1).

8. Procédé selon la revendication 7, **caractérisé en ce que** la direction du regard optimale du conducteur (4) est déterminée en fonction d'une position de sa tête.

9. Dispositif pour réduire l'éblouissement d'un conducteur (4) d'un premier véhicule (1) par un deuxième véhicule venant en sens inverse (2), contenant
un premier capteur (5) pour la saisie des hautes luminosités,
de premiers moyens (6, 7) pour déterminer la direction du regard optimale du conducteur (4) dans laquelle le conducteur (4) a une vue globale sur la circulation et en même temps sera ébloui le moins possible et
de deuxièmes moyens (9) pour engendrer une stimulation visuelle (11) au conducteur (4) pour que le conducteur (4) suive la direction du regard optimale.

10. Dispositif selon la revendication 9, **caractérisé en ce que** les deuxièmes moyens comprennent un projecteur spot (9).

11. Dispositif selon la revendication 9, **caractérisé en ce que** les deuxièmes moyens comprennent un appareil de projection.

12. Dispositif selon la revendication 11, **caractérisé en ce que** les premiers moyens comprennent un deuxième capteur (6) pour la saisie de la position de tête du conducteur (4).

13. Dispositif selon l'une des revendications 9 à 12, **caractérisé en ce que** le premier capteur comprend une première caméra (5) à logiciel approprié.

14. Dispositif selon l'une des revendications 9 à 13, **caractérisé en ce qu'**un troisième capteur (7) est disposé relativement à un accotement (8) pour déterminer une position du premier véhicule (1).

15. Dispositif selon la revendication 14, **caractérisé en ce que** le troisième capteur est un assistant d'avertissement de sortie de voie (7) ou comprend un capteur d'angle pour déterminer l'angle du volant et un capteur de lacet.
